# FASCICULE DE BREVET EUROPEEN

(11) **EP 4 159 502 B1**
(45) Date de publication et mention de la délivrance du brevet: **10.09.2025**
(21) Numéro de dépôt: 22199140.9
(22) Date de dépôt: 30.09.2022
(51) Int. Cl.: B60J 5/10

(54) **OUVRANT DE VÉHICULE AUTOMOBILE MUNI D'UNE PLATINE DE SUPPORT D´ÉQUIPEMENTS ET D'UNE PEAU AMOVIBLES**
KRAFTFAHRZEUG-FLÜGEL MIT ABNEHMBARER AUSRÜSTUNGSTRÄGERPLATTE UND HAUT
OPENING PANEL FOR A MOTOR VEHICLE PROVIDED WITH A REMOVABLE PLATE FOR SUPPORTING EQUIPMENT AND A REMOVABLE SKIN

(30) Priorité: 01.10.2021 FR 2110435
(43) Date de publication de la demande: 05.04.2023
(73) Titulaire: OPmobility SE, 69007 Lyon (FR)
(72) Inventeur: LETERRIER, Franck, 01150 SAINTE-JULIE (FR); COUDRON, Philippe, 01150 SAINTE-JULIE (FR)
(74) Mandataire: LLR

(56) Documents cités:
- WO-A2-2006/053548
- DE-A1- 102020 214 355
- FR-A1- 3 038 575
- US-A1- 2018 186 220
- US-B2- 10 220 688

## Description

L'invention concerne le domaine des pièces de carrosserie de véhicule automobile, plus spécifiquement des ouvrants, tels que des hayons ou des portes latérales, et en particulier l'intégration d'équipements qui y sont implantés.

Par exemple, un hayon de véhicule automobile comprend en général un panneau extérieur (aussi appelé peau extérieure) rapporté sur un panneau intérieur, ou cadre. Le panneau intérieur est muni d'une première ouverture dans la partie supérieure du hayon destinée à accueillir une lunette. Dans la partie inférieure du hayon, ce panneau intérieur est généralement pourvu de petits évidements permettant un passage local pour la fixation de composants.

Le document US 10,220,688 B2 décrit un hayon avec un panneau extérieur rapporté sur un panneau intérieur muni d'une telle première ouverture. L'ouvrant comprend une platine de support d'au moins un équipement.

Sur la plupart des véhicules, les hayons de véhicule automobile intègrent, en partie inférieure du hayon, des feux arrière latéraux de signalisation, tels que des feux stop, en général un feu gauche et un feu droit situés de façon symétrique de part et d'autre du hayon. De préférence, ces deux feux sont situés le plus possible le long des bords latéraux du hayon afin de faire face, en position fermée du hayon, au complément de feu arrière situé sur la caisse du véhicule. De tels feux sont à l'heure actuelle fabriqués par des fournisseurs sous forme de blocs d'éclairage ou blocs optiques. De tels blocs optiques comprennent une partie arrière, ou boîtier, dans lequel est disposé le dispositif d'éclairage, ainsi qu'une vitre, également appelée verrine, laissant passer la lumière quand le feu est en fonctionnement. Ces deux feux latéraux sont rapportés et montés sur le hayon sur et par sa face extérieure, ce qui présente de nombreux inconvénients.

En premier lieu, il est nécessaire de prévoir une verrine étanche par rapport au boîtier optique afin de protéger le dispositif d'éclairage. De plus, il convient pour un opérateur d'effectuer le montage des deux feux latéraux à deux endroits distincts du hayon, d'y raccorder des faisceaux électriques, et de rendre le montage étanche pour éviter que de l'eau de ruissellement ne puisse pénétrer au sein du volume délimité par le panneau intérieur et la peau extérieure du hayon, en passant entre le feu et la peau extérieure, ce qui présente des difficultés pratiques.

Un autre inconvénient réside dans le fait que les feux latéraux ainsi rapportés apparaissent comme des ajouts et ne présentent pas de continuité apparente avec le reste du hayon, ce qui nuit à son esthétique. En effet, une tendance chez les constructeurs automobiles est de faire en sorte que les différentes surfaces extérieures du véhicule soient affleurantes les unes avec les autres (« flush » en terminologie anglo-saxonne) et apparaissent sans discontinuités (« seamless » en terminologie anglo-saxonne »). Dans certaines configurations, des éléments lumineux peuvent même demeurer partiellement ou totalement invisibles de l'extérieur, par exemple quand ils ne sont pas activés (« hidden until lit » en terminologie anglo-saxonne).

Enfin, les feux latéraux rapportés présentent le désavantage de ne pas être facilement démontables. En effet, la plupart du temps, la peau extérieure du hayon est collée sur le panneau intérieur de façon définitive pour assurer l'étanchéité entre ces deux éléments. Il devient dès lors nécessaire, pour accéder aux feux latéraux, de passer par l'intérieur du véhicule à travers des orifices pratiqués à cet effet dans le panneau intérieur. Ceci présente plusieurs inconvénients. Le fait de pratiquer des orifices réduit la rigidité du panneau, et ce d'autant que les orifices doivent être assez grands pour pouvoir retirer les feux et leur connectique. De plus, ils doivent pouvoir être refermés pour être cachés et/ou éviter l'insertion de liquide à l'aide de couvercles spécifiques, ce qui complique la conception du hayon.

L'invention a notamment pour but de remédier à ces inconvénients en fournissant un ouvrant de véhicule automobile permettant d'intégrer dans sa partie inférieure des équipements, de façon étanche et permettant d'améliorer l'esthétique du véhicule, et donnant facilement accès à ces équipements.

À cet effet, l'invention concerne un ouvrant de véhicule automobile comprenant :
- un panneau intérieur, de préférence en matière plastique, muni d'une partie supérieure dans laquelle est pratiquée une première ouverture destinée à accueillir une lunette, et
- une peau extérieure, au moins partiellement en matière plastique, rapportée sur le panneau intérieur, comprenant une surface interne située en regard d'une surface externe du panneau intérieur.

L'ouvrant selon l'invention comprend en outre une platine de support d'au moins un équipement recouverte par la peau extérieure, la surface interne de la peau extérieure étant rapportée directement sur la platine de support de manière étanche, ladite platine étant disposée à l'intérieur d'un volume délimité, d'une part, par la surface externe d'un panneau intérieur et, d'autre part, par la surface interne de la peau extérieure, ladite platine étant fixée sur le panneau intérieur de sorte que l'ensemble composé de la platine et de la peau extérieure puisse être détaché du panneau intérieur de manière amovible.

On entend par surface externe du panneau intérieur la surface tournée vers l'extérieur du véhicule. La surface externe est opposée à la surface interne, qui est quant à elle tournée vers l'habitacle.

On entend qu'un premier élément est « rapporté sur» un deuxième élément par le fait que le premier élément soit disposé en regard du deuxième élément en le recouvrant au moins en partie, qu'il lui soit fixé ou non.

On entend qu'un premier élément est « rapporté directement sur » un deuxième élément par le fait que le premier élément soit rapporté sur le deuxième élément et que les éventuels moyens de fixation qui lient les deux éléments soient disposés directement sur ces deux éléments, sans pièce structurelle intermédiaire telle qu'un autre panneau par exemple. En outre, selon cette définition un premier élément est directement rapporté sur un deuxième élément y compris si des moyens de fixation (vis, rondelle, colle, etc.) d'étanchéité (joint, mousse, etc.), de décoration (film, peinture, etc.) et/ou d'isolation (mousse, etc.) sont disposés entre le premier élément et le deuxième élément.

Grâce à la présence d'une platine de support d'équipements recouverte par la peau extérieure et disposée à l'intérieur un volume délimité, d'une part, par la surface externe d'un panneau intérieur et, d'autre part, par la surface interne de la peau extérieure, il est possible de faire porter des dispositifs lumineux, de communication ou d'aide à la conduite par la platine de support d'équipements plutôt que de les rapporter en face externe de la peau extérieure de l'ouvrant. Cela facilite leur implémentation au sein de l'ouvrant à la position désirée pour chaque équipement, puisqu'ils sont préalablement assemblés sur la platine sur laquelle est ensuite rapportée la peau extérieure.

Ainsi, l'esthétique du véhicule est améliorée puisque les équipements n'apparaissent pas comme des ajouts et ne présentent pas de discontinuité apparente avec le reste de l'ouvrant.

En outre, il est également possible de faire en sorte que les équipements portés par la platine de support soient dissimulés par la peau extérieure, y compris, dans le cas d'un hayon, les feux arrière par exemple lorsqu'ils ne sont pas allumés. Par « dissimulés par la peau extérieure » on entend que les équipements ne sont pas visibles pour un utilisateur de manière évidente.

De plus, le fait que la peau extérieure soit rapportée directement et de manière étanche sur la platine de support d'équipements permet de créer une « zone sèche » spécifique pour les équipements portés par la platine de support. On entend ici par « zone sèche » un volume fermé, étanche par rapport à l'environnement extérieur. Ainsi, tous les équipements portés par la platine de support sont isolés de façon étanche de l'environnement extérieur via la liaison étanche obtenue entre la platine de support et la peau extérieure. Ceci est beaucoup plus aisé que d'assurer l'étanchéité autour de chaque équipement individuellement ou de rendre chaque équipement étanche, comme pour les blocs d'éclairage. Cela permet *in fine* de préserver ces équipements et donc d'assurer leur bon fonctionnement.

Enfin, le fait que la platine soit fixée sur le panneau intérieur de sorte que l'ensemble composé de la platine et de la peau extérieure soit fixé au panneau intérieur de manière amovible rend particulièrement aisé la réparation et/ou le remplacement de l'équipement porté par la platine. En effet, il suffit de détacher l'ensemble composé de la platine et de la peau du reste du hayon et de séparer la platine de la peau pour accéder à l'équipement et toute sa connectique.

Avantageusement, afin d'accéder facilement à l'équipement porté par la platine de support, l'ensemble composé de la platine et de la peau extérieure est configuré de sorte à pouvoir être détaché du panneau intérieur puis à en être écarté vers l'extérieur du véhicule. Il n'est en effet plus nécessaire de retirer l'équipement du véhicule à travers le panneau intérieur depuis l'intérieur du véhicule, ce qui facilite grandement sa maintenance, son remplacement et d'une manière générale le service après-vente.

Selon un mode de réalisation préféré de l'invention, la platine de support d'équipement est rapportée directement sur la surface externe du panneau intérieur de manière amovible, par exemple par vissage. Ceci permet de faciliter le démontage de la platine de support puisqu'il n'y a pas de pièce intermédiaire à démonter entre le panneau intérieur et la platine de support.

Selon un mode de réalisation particulier de l'invention, la platine de support d'équipement comprend une niche dont les parois délimitent un volume dans lequel est inséré ledit au moins un équipement et un rebord périphérique prolongeant les parois de la niche, le rebord périphérique étant fixé de manière amovible à la surface externe du panneau intérieur. Le volume délimité par la niche peut ainsi former une « zone sèche » pour les équipements.

De manière à assurer une étanchéité dans le volume délimité par la niche de la platine de support et donc protéger l'équipement qui se trouve dans ce volume, un joint d'étanchéité est disposé entre la platine de support et la surface interne de la peau extérieure.

Selon un mode de réalisation particulier de l'invention, la peau extérieure est rapportée sur la platine de support par collage.

Selon un autre mode de réalisation de l'invention, la peau extérieure est rapportée sur la platine de support de manière amovible, par exemple par vissage.

De préférence, la platine de support d'équipements comprend un dispositif émetteur et/ou récepteur d'un rayonnement électromagnétique et la peau extérieure comprend, en regard du dispositif émetteur et/ou récepteur de rayonnement électromagnétique, une zone de transmission, en matière plastique, qui est au moins partiellement transparente audit rayonnement électromagnétique.

On peut ainsi profiter de la platine de support pour disposer des dispositifs émetteurs de rayonnement dans le but d'établir par exemple une signature lumineuse continue sur toute la largeur du hayon si cela est désiré, ou encore y intégrer des dispositifs d'aide à la conduite, comme par exemple des radars (qui émettent généralement un rayonnement électromagnétique compris entre 20 et 80 GHz), des lidars (qui émettent généralement un rayonnement électromagnétique appartenant au spectre infrarouge) ou des caméras de recul. Enfin, il peut également s'agir d'équipement de communication, tels que des écrans ou des antennes. De façon générale, ces équipements peuvent être tout dispositif nécessitant une transparence aux ondes.

Selon un mode de réalisation particulier de l'invention, le rayonnement électromagnétique appartient au spectre visible.

Selon un autre mode de réalisation de l'invention, le rayonnement électromagnétique appartient au spectre non visible.

Afin de d'accéder facilement à l'équipement porté par la platine de support sans avoir à détacher la peau extérieure de la platine de support, la platine de support comprend au moins un orifice d'accès à un des équipements portés par la platine de support, et de préférence au moins un organe de fermeture dudit orifice d'accès.

Selon un mode de réalisation particulier de l'invention, la platine de support est monobloc.

Selon un autre mode de réalisation de l'invention, la platine de support est réalisée en plusieurs parties assemblées entre elles.

De préférence, afin notamment de pouvoir assurer une transparence de la peau à divers rayonnement électromagnétiques selon les besoins, la peau extérieure est réalisée dans une des matières suivantes :
- polypropylène (PP) ;
- polyamide (PA) ;
- polyéthylène (PE) ;
- acrylonitrile butadiène styrène (ABS) ;
- polyéthylène téréphtalate (PET) ;
- polystyrène (PS) ;
- polycarbonate (PC) ;
- polyméthacrylate de méthyle (PMMA) ;
- copolymère de cyclo-oléfine (COC) ;
ainsi que toute combinaison de ces matières.

Selon un autre mode de réalisation de l'invention, l'ouvrant constitue un hayon ou une porte latérale.

### Brève description des figures

L'invention sera mieux comprise à la lecture de la description qui va suivre, dans laquelle l'ouvrant de l'invention a été décrit sous la forme d'un hayon, description donnée uniquement à titre d'exemple et faite en se référant aux dessins annexés dans lesquels :
[Fig. 1] la figure 1 est un ensemble de vues schématiques (figure 1A en éclaté et 1B en assemblé) d'une platine de support d'équipement et d'une peau extérieure d'un hayon selon un mode de réalisation de l'invention,
[Fig. 2] la figure 2 est une vue schématique éclatée d'un hayon selon un premier mode de réalisation de l'invention,
[Fig. 3] la figure 3 est une vue schématique du hayon de la figure 2,
[Fig. 4] la figure 4 est une coupe schématique réalisée selon le plan de coupe IV-IV de la figure 3,
[Fig. 5] la figure 5 est une coupe schématique de la platine d'équipement et de l'équipement de la figure 4, l'équipement ayant été extrait de la platine d'équipement,
[Fig. 6] la figure 6 est une vue similaire à la figure 4 d'un hayon selon un deuxième mode de réalisation de l'invention,
[Fig. 7] la figure 7 est une coupe schématique de la platine d'équipement et de l'équipement de la figure 6, la peau ayant été détachée de la platine d'équipement,

### Description détaillée

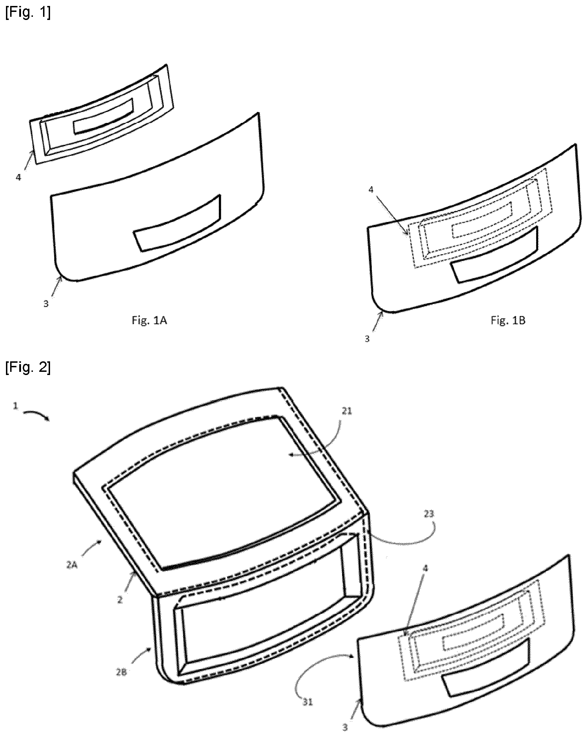

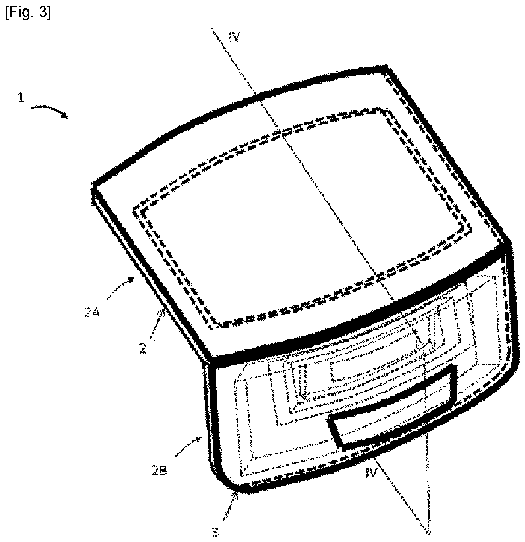

On a représenté sur les figures 1A à 4 un hayon de véhicule automobile 1 selon un premier mode de réalisation de l'invention. Le véhicule automobile n'est pas représenté sur les figures.

Le hayon 1, comme on peut le voir notamment à la figure 2, comprend un panneau intérieur 2, de préférence en matière plastique, muni d'une partie supérieure 2A dans laquelle est pratiquée une première ouverture 21 destinée à accueillir une lunette 7. La lunette 7 est notamment fixée au panneau intérieur 2 via un cordon de colle 8.

Le hayon 1 comprend également une peau extérieure 3, au moins partiellement en matière plastique, placée contre le panneau intérieur 2, comprenant une surface interne 31 située en regard d'une surface externe 23 du panneau intérieur 2. On entend par surface externe 23 du panneau intérieur la surface tournée vers l'extérieur du véhicule. La surface externe 23 est opposée à une surface interne 24 du panneau extérieur, qui est quant à elle tournée vers l'habitacle.

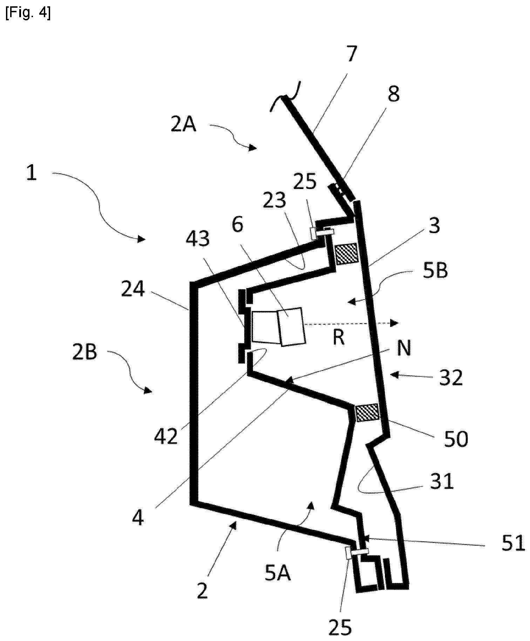

Comme on peut le voir à la figure 4, le hayon 1 comprend en outre une platine de support 4 d'au moins un équipement 6. La surface interne 31 de la peau extérieure 3 est rapportée directement sur une surface externe de la platine de support 4 de manière étanche.

La platine de support 4 est plus particulièrement disposée à l'intérieur d'un volume interne 5A délimité, d'une part, par la surface externe 23 du panneau intérieur 2 et, d'autre part, par la surface interne 31 de la peau extérieure 3.

La platine de support 4 est rapportée directement sur le panneau intérieur 2 de sorte que l'ensemble composé de la platine de support 4 et de la peau extérieure 3 est monté sur le panneau intérieur 2 de manière amovible, et en particulier de sorte à pouvoir être détaché puis être écarté du panneau intérieur 2 vers l'extérieur (dans le sens gauche vers droite des figures 4 à 7) du véhicule, comme on l'expliquera plus loin.

Plus précisément, dans l'exemple représenté sur les figures, la platine de support 4 est ici rapportée directement, via sa surface interne, sur la surface externe 23 du panneau intérieur 2.

La platine de support 4 comprend une niche N dont les parois délimitent un volume 5B dans lequel est logé ledit au moins un équipement 6, ainsi qu'un rebord périphérique 51 prolongeant les parois de la niche N.

L'étanchéité du volume 5B est assurée grâce à un joint d'étanchéité 50 périphérique disposé entre la platine de support 4 et la surface interne 31 de la peau extérieure 3.

Le rebord périphérique 51 est fixé de manière amovible à la surface externe 23 du panneau intérieur 2. Pour cela, comme on peut le voir à la figure 4, il est notamment assemblé à la surface externe 23 du panneau intérieur à l'aide de vis 25. Les vis 25 sont insérées dans la platine de support 4 et le panneau intérieur 2 de sorte que l'on puisse accéder à leurs têtes, et donc les dévisser, depuis l'intérieur du véhicule par la surface interne 24 (côté habitacle).

On notera que les vis 25 permettant l'assemblage amovible de la platine de support 4 à la surface externe 23 du panneau intérieur 2 pourraient être disposées à d'autres endroits que le rebord périphérique 51. En particulier, dans une variante non représentée, la fixation de la platine de support 4 à la surface externe 23 du panneau intérieur 2 peut être réalisée au niveau d'une des parois de la niche N, hors rebord 51.

On peut naturellement envisager d'autres moyens de fixation que des vis, comme par exemple des clips, du moment qu'ils permettent un retrait de la platine de support 4 du panneau intérieur 2 de manière amovible. On entend par amovible un moyen de fixation réversible plusieurs fois sans altérer les pièces, au contraire d'un collage par exemple.

Un joint d'étanchéité (non visible sur les figures) peut également être disposé entre le rebord périphérique 51 et la surface externe 23 du panneau intérieur. Il peut s'agir par exemple d'un joint d'étanchéité en mousse comprimé entre le rebord périphérique 51 et la surface externe 23 du panneau intérieur. Dans une variante, le joint d'étanchéité sera comprimé entre une autre partie de la platine de support 4 en regard de la surface externe 23 du panneau intérieur et la surface externe 23 du panneau intérieur.

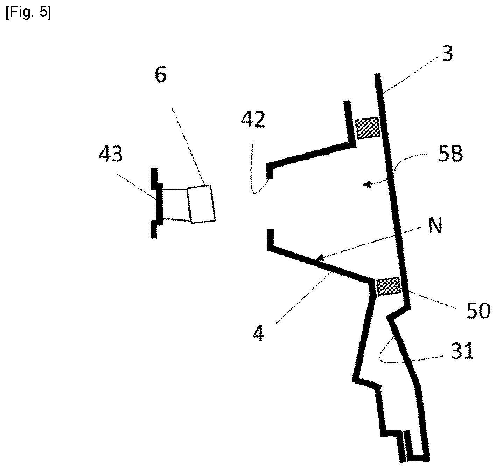

La peau extérieure 3 est quant à elle rapportée, de préférence directement, sur la platine de support 4. Dans ce premier mode de réalisation de l'invention représenté aux figures 4 et 5, la peau extérieure 3 est collée (la colle est non visible sur les figures), via sa surface intérieure 31, à la platine de support 4.

En revanche, la peau extérieure 3 n'est pas nécessairement fixée sur le panneau intérieur 3 : elle peut n'être reliée à ce dernier que via la platine de support 4, comme représenté sur les figures 4 et 5. Néanmoins, la peau extérieure 3 est ici rapportée contre la surface externe 23 du panneau intérieur 2 en étant en contact avec celle-ci, mais sans y être fixée. En particulier, elle pourra être rapportée contre la surface externe 23 du panneau intérieur 2 de manière étanche, par exemple à l'aide d'un joint d'étanchéité disposé entre la surface interne 31 de la peau extérieure 3 et la surface externe 23 du panneau intérieur 2 (le joint n'est pas visible sur les figures).Que la peau extérieure 3 soit fixée ou non au panneau intérieur 2, elle est de préférence, dans tous les cas, rapportée (il peut avoir y avoir contact ou non) contre la surface externe 23 du panneau intérieur 2..

La platine de support 4 étant rapportée de matière amovible sur le panneau intérieur 2 grâce aux moyens de fixation réversibles telles que des vis, il est possible de détacher et retirer l'ensemble composé de la platine de support 4 et de la peau extérieure 3 du panneau intérieur 2, en particulier depuis l'intérieur vers l'extérieur du véhicule, qui est retiré sur la figure 5.

Dans le mode de réalisation représenté sur les figures, pour détacher la platine de support 4 du panneau intérieur 2, on dévisse les vis 25 (ou tout autre moyen de fixation de la platine de support 4 au panneau intérieur 2) depuis l'intérieur du véhicule (côté habitacle). Puis, on peut retirer l'ensemble composé de la platine de support 4 et de la peau extérieure 3 du panneau intérieur 2 depuis l'extérieur du véhicule et séparer cet ensemble du reste du véhicule. La figure 5 illustre l'ensemble séparé du reste du véhicule.

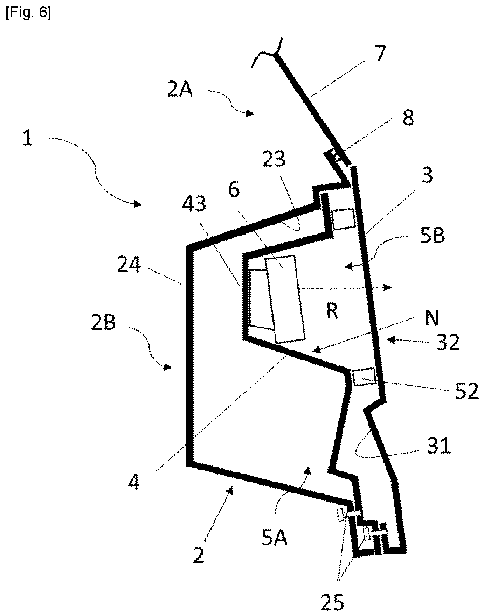

La platine de support 4 comprend un ou plusieurs équipements 6 dont un seul est visible sur les coupes représentées 4 à 8. Bien évidemment, ceux-ci peuvent être différents les uns des autres. Il peut s'agir par exemple, d'un ou plusieurs dispositifs lumineux qui émettent un rayonnement électromagnétique R dans le spectre visible. Ce rayonnement électromagnétique est schématisé par une flèche en pointillés sur les figures 4 et 6. Ces dispositifs lumineux peuvent être répartis sur tout ou partie de largeur de la platine de support 4 dans le but d'établir la signature lumineuse désirée. Ainsi, il est possible d'obtenir une signature lumineuse d'aspect continue sur toute la largeur du hayon si cela est désiré.

Le ou les équipements 6 peuvent également être des dispositifs d'aide à la conduite, comme par exemple des radars (qui émettent généralement un rayonnement électromagnétique compris entre 20 et 80 GHz), des lidars (qui émettent généralement un rayonnement électromagnétique appartenant au spectre infrarouge) ou des caméras de recul. Enfin, il peut également s'agir d'équipement de communication, tels que des écrans d'information ou des antennes. De façon générale, le ou les équipements 6 peuvent être tout dispositif nécessitant une transparence aux ondes.

La zone de la peau extérieure 3 située en regard de l'équipement 6 est une zone de transmission 32 en matière plastique au moins partiellement transparente au rayonnement électromagnétique de l'équipement, dans le cas où ce dernier émet et/ou reçoit un rayonnement électromagnétique. Par au « moins transparent au rayonnement électromagnétique », on entend que cette zone de transmission 32 permet le passage d'une quantité d'ondes électromagnétiques suffisante pour que l'équipement puisse remplir la fonction qui lui est dédiée correctement et continuellement. Dans le cas d'un dispositif lumineux, par exemple, cela signifie que la zone de transmission 32 laisse passer les rayons lumineux émis par le dispositif afin que ceux-ci puissent être vus par un observateur extérieur au véhicule.

La peau extérieure 3 est de préférence réalisée dans une des matières suivantes :
- polypropylène (PP) ;
- polyamide (PA) ;
- polyéthylène (PE) ;
- acrylonitrile butadiène styrène (ABS) ;
- polyéthylène téréphtalate (PET) ;
- polystyrène (PS) ;
- polycarbonate (PC) ;
- polyméthacrylate de méthyle (PMMA) ;
- copolymère de cyclo-oléfine (COC) ;
ainsi que toute combinaison de ces matières.

La platine de support 4 peut être monobloc ce qui simplifie sa fabrication et évite les étapes d'assemblage de plusieurs éléments sur la peau extérieure 3. Alternativement, la platine de support 4 peut être réalisée de plusieurs parties assemblées entre elles soit avant d'être introduites dans le volume interne 5A, soit après avoir été introduites dans le volume interne 5A.

Dans le premier mode de réalisation selon l'invention, et comme représenté aux figures 4 et 5, la platine de support 4 est pourvue d'un orifice d'accès 42 qui permet d'accéder à l'équipement 6 porté par la platine 4, par exemple en vue de son installation ou de sa maintenance. En particulier, l'orifice d'accès 42 est pratiqué dans le fond de la niche N, ce qui permet un accès le plus direct à l'équipement 6.

On peut ainsi de garantir un accès au volume interne 5A une fois la platine de support 4 détachée et retirée du panneau intérieur 2 comme représenté à la figure 5.

Bien entendu, on peut prévoir plusieurs orifices d'accès 42 répartis dans la platine de support 4, dans le but de pouvoir accéder facilement à l'ensemble des équipements 6 portés par la platine de support 4.

L'orifice d'accès 42 est de préférence fermé via un organe de fermeture 43 ou couvercle qui permet ainsi de créer un volume interne fermé, et de plus de préférence monté étanche sur le fond de la niche N, supplémentaire 5B au sein même du volume interne 5A principal, comme on peut le voir à la figure 4. Ainsi, le ou les équipements 6 portés par la platine de support 4 se situe au sein d'une zone sèche et étanche qui les protège.

On notera que dans une variante non représentée de l'invention, la fixation de la platine de support 4 à la surface externe 23 du panneau intérieur 2 peut être réalisée au niveau du fond de la niche dans lequel est pratiqué l'orifice d'accès 42. Ainsi, les vis 25 pourraient être portées par le fond de la niche N dans lequel est pratiqué l'orifice d'accès 42.

Par ailleurs, dans les exemples représentés sur les figures, l'équipement 6 est porté par l'organe de fermeture 43, ce qui présente l'avantage de pouvoir retirer l'équipement 6 de du volume 5B en même temps que l'organe de fermeture 43. Toutefois, il ne s'agit que d'un exemple et le ou les équipements 6 peuvent être portés par toute autre paroi de la niche N notamment. Dans ce cas, l'organe de fermeture 43 permet seulement de combler l'ouverture 42 donnant accès à l'équipement 6 et son retrait permet de donner accès à l'équipement 6, qui peut être retiré du volume 5B après que l'organe de fermeture 43 ait été retiré du reste de la platine de support 4. En variante, selon les besoins, l'équipement 6 n'a pas à être retiré de la niche 5B pour pouvoir bénéficier d'une maintenance, l'opérateur pouvant intervenir à travers l'orifice d'accès 42.

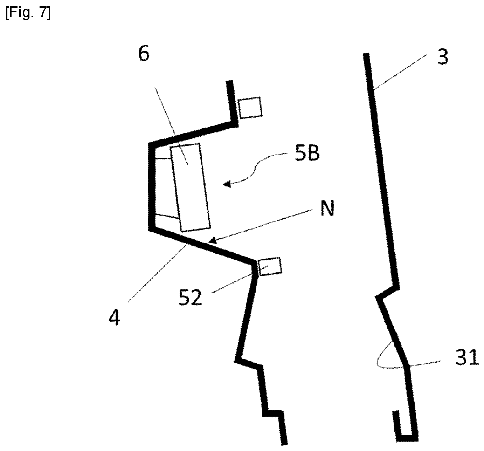

Dans un deuxième mode de réalisation de l'invention illustré aux figures 6 et 7, la peau extérieure 3 n'est plus collée à la platine de support 4, mais est rapportée sur celle-ci de manière amovible, par exemple par vissage à l'aide de vis 35 (une seule est représenté à la figure 6). On peut ainsi détacher la peau extérieure de la platine de support 4, comme on peut le voir à la figure 5, et avoir ainsi accès à la niche N et à l'équipement 6. Naturellement on pourra prévoir d'autres moyens de fixation que des vis, comme des clips, du moment qu'ils permettent un retrait amovible et de préférence réversible.

Dans ce mode de réalisation également, pour assurer l'étanchéité du volume 5B, on pourra prévoir un joint d'étanchéité 50 disposé entre la peau extérieure 3 et la platine de support 4. Il peut notamment s'agir d'un joint d'étanchéité en mousse comprimé entre le rebord périphérique 51 (ou une autre zone de la platine de support 4 en regard de la surface interne 31 de la peau extérieure) et la surface interne 31 de la peau extérieure 3. Le joint d'étanchéité 50 pourra notamment être porté par la platine de support 4 une fois la peau extérieure 3 détachée de celle-ci comme illustré à la figure 7. Dans une variante, le joint d'étanchéité 50 pourra être porté par la peau extérieure 3.

Dans ce deuxième mode de réalisation, la peau extérieure 3 étant montée amovible sur la platine de support 4, il n'est plus nécessaire de pratiquer un orifice d'accès 42 à l'équipement 6 dans la platine, comme on peut le voir aux figures 6 et 7. Néanmoins, on tout de même pourra le prévoir dans une variante non représentée.

Dans un mode de réalisation non représenté, de façon optionnelle, la peau extérieure 3 pourrait être fixée de manière amovible, par exemple par vissage, au panneau intérieur 2.

L'invention n'est pas limitée aux modes de réalisation présentés et d'autres modes de réalisation apparaîtront clairement à l'homme du métier.

### Liste de références

1 : hayon
2 : panneau intérieur
2A : partie supérieure du panneau intérieur
2B : partie inférieure du panneau intérieur
3 : peau extérieure
4 : platine de support d'équipement(s)
5A : volume interne de l'ouvrant
5B : volume interne de la platine
6 : équipement de la platine
7 : lunette
8 : cordon de colle lunette
23 : surface externe du panneau intérieur
24 : surface interne du panneau intérieur
25 : vis entre la platine de support et le panneau intérieur
31 : surface interne de la peau extérieure
32 : zone de transmission
35 : vis entre la platine de support et la peau extérieure
42 : orifice d'accès de la platine
43 : organe de fermeture
50 : joint d'étanchéité
51 : rebord de la platine
N : niche de la platine de support
R : rayonnement électromagnétique

## Revendications

1. Ouvrant (1) de véhicule automobile comprenant :
- un panneau intérieur (2), de préférence en matière plastique, muni d'une partie supérieure (2A) dans laquelle est pratiquée une première ouverture (21) destinée à accueillir une lunette (7) et
- une peau extérieure (3), au moins partiellement en matière plastique, rapportée sur le panneau intérieur (2), comprenant une surface interne (31) située en regard d'une surface externe (23) du panneau intérieur (2), et
- une platine de support d'au moins un équipement (4), **caractérisé en ce que** la platine de support (4) est recouverte par la peau extérieure (3), la surface interne (31) de la peau extérieure (3) étant rapportée directement sur la platine de support (4) de manière étanche, ladite platine (4) étant disposée à l'intérieur d'un volume interne (5A) délimité, d'une part, par la surface externe (23) du panneau intérieur (2) et, d'autre part, par la surface interne (31) de la peau extérieure (3),
ladite platine (4) étant rapportée et fixée sur le panneau intérieur (2) de sorte que l'ensemble composé de la platine (4) et de la peau extérieure (3) est fixé sur le panneau intérieur (3) de manière amovible.

2. Ouvrant (1) de véhicule automobile selon la revendication 1, dans lequel l'ensemble composé de la platine (4) et de la peau extérieure (3) est configuré de sorte à pouvoir être détaché du panneau intérieur (2) puis à en être écarté vers l'extérieur du véhicule.

3. Ouvrant (1) de véhicule automobile selon la revendication 1 ou 2, dans lequel la platine de support d'équipement (4) est rapportée directement sur la surface externe (23) du panneau intérieur (2) de manière amovible, par exemple par vissage.

4. Ouvrant (1) de véhicule automobile selon la revendication 3, dans lequel la platine de support (4) d'équipement comprend une niche (N) dont les parois délimitent un volume (5B) dans lequel est inséré ledit au moins un équipement (4) et un rebord périphérique (51) prolongeant les parois de la niche (N), le rebord périphérique étant fixé de manière amovible à la surface externe (23) du panneau intérieur (2).

5. Ouvrant (1) de véhicule automobile selon la revendication 4, dans lequel un joint d'étanchéité (50) est disposé entre la platine de support (4) et la surface interne (31) de la peau extérieure (3).

6. Ouvrant (1) de véhicule automobile selon l'une quelconque des revendications précédentes, dans lequel la peau extérieure (3) est rapportée sur la platine de support (4) par collage.

7. Ouvrant (1) de véhicule automobile selon l'une quelconque des revendications 1 à 6, dans lequel la peau extérieure (3) est rapportée sur la platine de support (4) de manière amovible, par exemple par vissage.

8. Ouvrant (1) de véhicule automobile selon l'une quelconque des revendications précédentes, dans lequel la platine de support d'équipements (4) comprend un dispositif (6) émetteur et/ou récepteur d'un rayonnement électromagnétique et la peau extérieure (3) comprend, en regard du dispositif (6) émetteur et/ou récepteur de rayonnement électromagnétique, une zone de transmission (32), en matière plastique, qui est au moins partiellement transparente audit rayonnement électromagnétique.

9. Ouvrant (1) de véhicule automobile selon l'une quelconque des revendications précédentes, dans lequel la platine de support (4) comprend au moins un orifice d'accès (42) à un des équipements (6) portés par la platine de support (4), et de préférence au moins un organe de fermeture (43) dudit orifice d'accès (42).

## Patentansprüche

1. Kraftfahrzeug-Flügel (1), umfassend:
- eine Innentafel (2), bevorzugt aus Kunststoff, die mit einem oberen Teil (2A) versehen ist, in dem eine erste Öffnung (21) hergestellt ist, die zur Aufnahme eines Fensters (7) bestimmt ist, und
- eine Außenhaut (3), wenigstens teilweise aus Kunststoff, die auf der Innentafel (2) angebracht ist und eine Innenfläche (31) umfasst, die einer Außenfläche (23) der Innentafel (2) gegenüber befindlich ist, und
- eine Träger-Platte (4) für wenigstens eine Ausrüstung,
**dadurch gekennzeichnet, dass** die Träger-Platte (4) von der Außenhaut (3) bedeckt ist, wobei die Innenfläche (31) der Außenhaut (3) unmittelbar auf der Träger-Platte (4) abdichtend angebracht ist, wobei die Platte (4) im Inneren eines Innenvolumens (5A) angeordnet ist, das, einerseits, durch die Außenfläche (23) der Innentafel (2) und, andererseits, durch die Innenfläche (31) der Außenhaut (3) begrenzt ist,
wobei die Platte (4) auf der Innentafel (2) so angebracht und befestigt ist, dass die Anordnung, die aus der Platte (4) und der Außenhaut (3) besteht, auf der Innentafel (3) abnehmbar befestigt ist.

2. Kraftfahrzeug-Flügel (1) nach Anspruch 1, wobei die Anordnung, die aus der Platte (4) und der Außenhaut (3) besteht, so ausgebildet ist, dass sie von der Innentafel (2) gelöst und anschließend nach außerhalb des Fahrzeugs von ihr abgespreizt werden kann.

3. Kraftfahrzeug-Flügel (1) nach Anspruch 1 oder 2, wobei die Träger-Platte (4) für Ausrüstung unmittelbar auf der Außenfläche (23) der Innentafel (2) angebracht ist, so dass sie abnehmbar ist, zum Beispiel durch Verschrauben.

4. Kraftfahrzeug-Flügel (1) nach Anspruch 3, wobei die Träger-Platte (4) für Ausrüstung eine Nische (N), deren Wände ein Volumen (5B) begrenzen, in dem die wenigstens eine Ausrüstung (4) eingesetzt ist, und einen umlaufenden Rand (51), der die Wände der Nische (N) verlängert, umfasst, wobei der umlaufende Rand an der Außenfläche (23) der Innentafel (2) abnehmbar befestigt ist.

5. Kraftfahrzeug-Flügel (1) nach Anspruch 4, wobei ein Dichtungselement (50) zwischen der Träger-Platte (4) und der Innenfläche (31) der Außenhaut (3) angeordnet ist.

6. Kraftfahrzeug-Flügel (1) nach einem der vorhergehenden Ansprüche, wobei die Außenhaut (3) auf der Träger-Platte (4) durch Verkleben angebracht ist.

7. Kraftfahrzeug-Flügel (1) nach einem der Ansprüche 1 bis 6, wobei die Außenhaut (3) auf der Träger-Platte (4) abnehmbar angebracht ist, zum Beispiel durch Verschrauben.

8. Kraftfahrzeug-Flügel (1) nach einem der vorhergehenden Ansprüche, wobei die Träger-Platte (4) für Ausrüstung eine Vorrichtung (6) zum Senden und/oder Empfangen einer elektromagnetischen Strahlung umfasst und die Außenhaut (3), der Vorrichtung (6) zum Senden und/oder Empfangen von elektromagnetischer Strahlung gegenüber, eine Übertragungszone (32), aus Kunststoff umfasst, die für die elektromagnetische Strahlung wenigstens teilweise durchlässig ist.

9. Kraftfahrzeug-Flügel (1) nach einem der vorhergehenden Ansprüche, wobei die Träger-Platte (4) wenigstens eine Öffnung (42) für den Zugang zu einer der Ausrüstungen (6), die von der Träger-Platte (4) getragen sind, und bevorzugt wenigstens ein Element (43) zum Verschließen dieser Zugangs-Öffnung (42) umfasst.

## Claims

1. Motor vehicle opening panel (1) comprising:
- an inner panel (2), preferably made of plastic material, provided with an upper part (2A) in which a first opening (21) is made that is intended to accommodate a rear window (7), and
- an outer skin (3), at least partially made of plastic material, attached to the inner panel (2), comprising an inner surface (31) located opposite an outer surface (23) of the inner panel (2), and
- support plate (4) for at least one equipment item (6),
**characterized in that** the support plate (4) is covered by the outer skin (3), the inner surface (31) of the outer skin (3) being attached directly to the support plate (4) in a sealed manner,
said plate (4) being arranged inside a volume (5A) delimited, on the one hand, by the outer surface (23) of the inner panel (2) and, on the other hand, by the inner surface (31) of the outer skin (3),
said plate (4) being applied on and fastened to the inner panel (2) so that the assembly consisting of the plate (4) and the outer skin (3) can be removably detached from the inner panel (3).

2. Motor vehicle opening panel (1) according to claim 1, wherein the assembly consisting of the plate (4) and the outer skin (3) is configured so as to be able to be detached from the inner panel (2) and then to be moved away from it toward the outside of the vehicle.

3. Motor vehicle opening panel (1) according to claim 1 or 2, wherein the equipment support plate (4) is applied directly to the outer surface (23) of the inner panel (2) in a removable manner, for example by screwing.

4. Motor vehicle opening panel (1) according to claim 3, wherein the equipment support plate (4) comprises a niche (N) whose walls delimit a volume (5B) in which said at least one equipment item (6) is inserted and a peripheral rim (51) extending the walls of the niche (N), the peripheral rim being removably fastened to the outer surface (23) of the inner panel (2).

5. Motor vehicle opening panel (1) according to claim 4, wherein a seal (50) is placed between the support plate (4) and the inner surface (31) of the outer skin (3).

6. Motor vehicle opening panel (1) according to any one of the preceding claims, wherein the outer skin (3) is applied to the support plate (4) by gluing.

7. Motor vehicle opening panel (1) according to any one of claims 1 to 6, wherein the outer skin (3) is applied to the support plate (4) removably, for example by screwing.

8. Motor vehicle opening panel (1) according to any one of the preceding claims, wherein the equipment support plate (4) comprises a device (6) emitting and/or receiving electromagnetic radiation and the outer skin (3) comprises, opposite the device (6) emitting and/or receiving electromagnetic radiation, a transmission zone (32), made of plastic, that is at least partially transparent to said electromagnetic radiation.

9. Motor vehicle opening panel (1) according to any one of the preceding claims, wherein the support plate (4) comprises at least one access orifice (42) to one of the equipment items (6) carried by the support plate (4), and preferably at least one closure member (43) of said access orifice (42).
